# EUROPEAN PATENT APPLICATION

(11) **EP 3 279 023 A1**
(43) Date of publication of application: **07.02.2018**
(21) Application number: 15887521.1
(22) Date of filing: 30.03.2015
(51) Int. Cl.: B60K 35/00, B60K 37/00

(54) **DISPLAY DEVICE**

(71) Applicant: Pioneer Corporation, Tokyo 113-0021 (JP); Tohoku Pioneer Corporation, Tendo-shi, Yamagata 994-8585 (JP)
(72) Inventor: SAITOU, Kazuhiro, Tendo-shi Yamagata 994-8585 (JP); KAWAMURA, Kenji, Tendo-shi Yamagata 994-8585 (JP); SUZUKI, Toru, Tendo-shi Yamagata 994-8585 (JP)
(74) Representative: Viering, Jentschura & Partner mbB Patent- und Rechtsanwälte
(86) International application number: PCT/JP2015/059945
(87) International publication number: WO 2016/157368

(57) **Abstract**

The display device comprises: a housing; a display member which gets in and out of the housing; and a transfer member which moves in a depth direction of a side face of the housing by a driving of a driving unit and transfers a driving force of the driving unit to the display member. The supporting part of the display member engages with a guide on the transfer member, and moves along a guide on the side face of the housing while moving in the guide on the transfer member in the thickness direction of the housing.

## Description

### TECHNICAL FIELD

The present invention relates to a display device having a moving mechanism of a display member.

### BACKGROUND TECHNIQUE

There is known a head-up display device mounted around a driver's seat of a vehicle. For example, Patent Reference 1 discloses an on-vehicle display device capable of receiving and exposing a large-sized reflector with a small space. In this on-vehicle display device, a combiner moving mechanism performs bending operation and extending operation of a link mechanism including a combiner holder 31 and swing arms 34. Thereby, the combiner 3 is moved up and down between the exposed position and the received position in a manner being tilted around a second support axis 45.

### PRIOR ART REFERENCES

### PATENT REFERENCES

Patent Reference 1: Japanese Patent Application Laid-Open under No. 2014-205376

### SUMMARY OF THE INVENTION

### PROBLEM TO BE SOLVED BY THE INVENTION

When the combiner moving mechanism like Patent Reference 1 is employed, it is necessary to secure, in the receiving case 6, a space which enables the bending operation and the extending operation of the link mechanism including the combiner holder 31 and the swing arms 34, and hence there is such a problem that the on-vehicle display device becomes large in size.

The above is an example of the problem to be solved by the present invention. It is an object of the present invention to provide a display device small in size.

### MEANS FOR SOLVING THE PROBLEM

An invention described in claims is a display device comprising: a housing; a display member which gets in and out of the housing; and a transfer member which moves along a side face of the housing by a driving of a driving unit and transfers a driving force of the driving unit to the display member, wherein a supporting part of the display member engages with a guide on the transfer member and moves along a guide on the side face of the housing.

Another invention described in claims is a display device comprising: a housing; a display member which gets in and out of the housing; and a transfer member which moves along a side face of the housing by a driving of a driving unit and transfers a driving force of the driving unit to the display member, wherein a length of the transfer member varies by the driving of the driving unit, and wherein the transfer member includes a first transfer member and a second transfer member aligned in a thickness direction and/or a depth direction of the housing, the first transfer member and the second transfer member engaging with each other to move close to and away from each other.

### BRIEF DESCRIPTION OF THE DRAWINGS

FIG. 1 is a perspective view of a head-up display according to an embodiment in a closed state.
FIG. 2 is a perspective view of the head-up display according to the embodiment in an opening/closing state.
FIG. 3 is a perspective view of the head-up display according to the embodiment in an opened state.
FIG. 4 illustrates a movable area of a transfer member.
FIGS. 5A and 5B are perspective views illustrating a structure for an angle adjustment of a combiner unit.
FIGS. 6A and 6B are perspective views illustrating a structure of a side cover.
FIG. 7 is a perspective view of the head-up display in the opened state.
FIG. 8 is a perspective view of a head-up display according to a modified example in a closed state.
FIG. 9 is a perspective view of the head-up display according to the modified example in an opening/closing state.
FIG. 10 is a perspective view of the head-up display according to the modified example in an opened state.

### DETAILED DESCRIPTION OF THE PREFERRED EMBODIMENTS

According to one aspect of the present invention, there is provided a display device comprising: a housing; a display member which gets in and out of the housing; and a transfer member which moves along a side face of the housing by a driving of a driving unit and transfers a driving force of the driving unit to the display member, wherein a supporting part of the display member engages with a guide on the transfer member and moves along a guide on the side face of the housing.

In the above display device, by providing the transfer member with a guide in which the supporting part of the transfer member can move, the length of the side face of the housing may be overlapped with the length of the transfer member, and the display device can be small in size.

In one mode of the above display device, a length of the transfer member varies by the driving of the driving unit, and the transfer member includes a first transfer member and a second transfer member aligned in a thickness direction and/or a depth direction of the housing, the first transfer member and the second transfer member engaging with each other to move close to and away from each other. Inthismode, by varying the length of the transfer member in the thickness direction and/or the depth direction of the housing, the length of the housing in the thickness direction and/or the depth direction can be small irrespective of the length of the transfer member.

In a preferred example, an opening is formed on an upper face of the housing, the guide on the transfer member is formed on the first transfer member, the first transfer member is arranged on the side of the opening, compared with the second transfer member, and the second transfer member is arranged on a back side in the depthdirection, compared with the guide formed on the first transfer member.

In another preferred example, the first transfer member has a plan shape that can receive the second transfer member. In a preferred example in that case, the first transfer member has a plan shape of an L-shape or a U-shape. Thus, the display device can be miniaturized as a whole.

Another mode of the above display device further comprises a cover which covers the opening, the transfer member comprises a third transfer member which engages with the cover, the third transfer member is rotatably supported by the housing and rotated by a predetermined angle by a movement of the first transfer member, and the display member gets out of the housing after the third transfer member is rotated during a transition from a closed state to an opened state, and the third transfer member starts rotating after the display member is received in the housing during a transition from the opened state to the closed state. In this mode, by using the rotatable third transfer member, the movement of the cover can be completed before the display member gets out of the housing during the transition from the closed state to the opened state, and the movement of the cover can be stopped until the display member gets in the housing during the transition from the opened state to the closed state. Therefore, damage of the display member by collision with the cover can be avoided.

In still another mode of the above display device, the cover is forced to a back side of the housing by an elastic member. By this, the cover can be stably fixed in the opened state.

In still another mode of the above display device, a back-side end part of the guide on the side face of the housing is bending toward the opening. By this, the angle of the display member with respect to the housing can be maintained and the movement of the display member can be avoided in the opened state.

In a preferred example, the supporting part is a part of the display member at its lower end or a member connected to the lower end.

According to another aspect of the present invention, there is provided a display device comprising: a housing; a display member which gets in and out of the housing; and a transfer member which moves along a side face of the housing by a driving of a driving unit and transfers a driving force of the driving unit to the display member, wherein a length of the transfer member varies by the driving of the driving unit, and wherein the transfer member includes a first transfer member and a second transfer member aligned in a thickness direction and/or a depth direction of the housing, the first transfer member and the second transfer member engaging with each other to move close to and away from each other.

In the above display device, the length of the transfer member varies by the driving of the driving unit, and the transfer member includes a first transfer member and a second transfer member aligned in a thickness direction and/or a depth direction of the housing, the first transfer member and the second transfer member engaging with each other to move close to and away from each other. Therefore, the length of the transfer member in the thickness direction and/or the depth direction of the housing can be short, and the display device can be miniaturized.

### EMBODIMENTS

Preferred embodiments of the present invention will be described below with reference to the attached drawings.

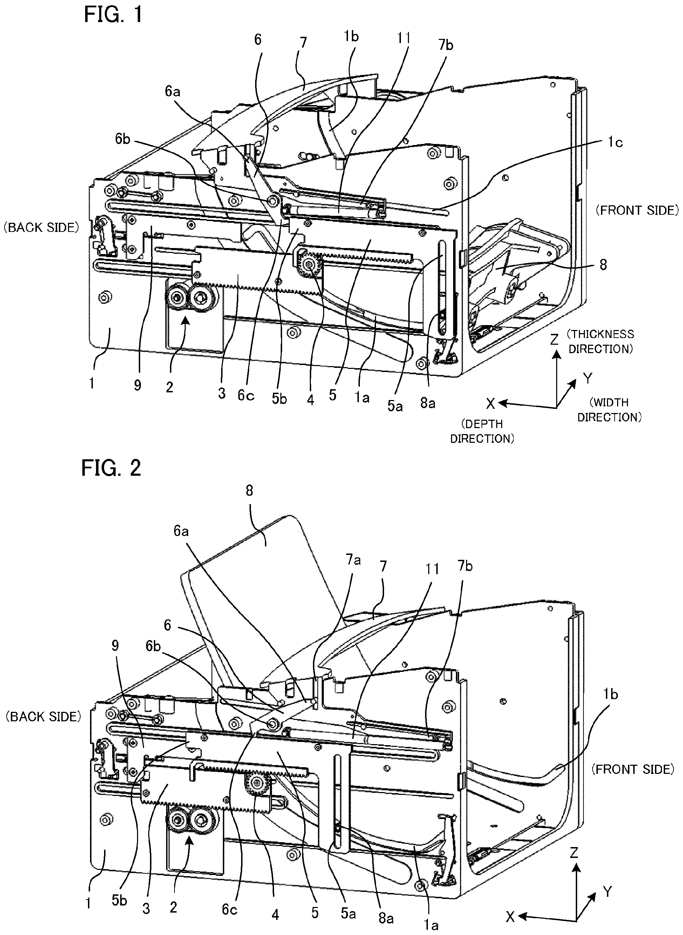

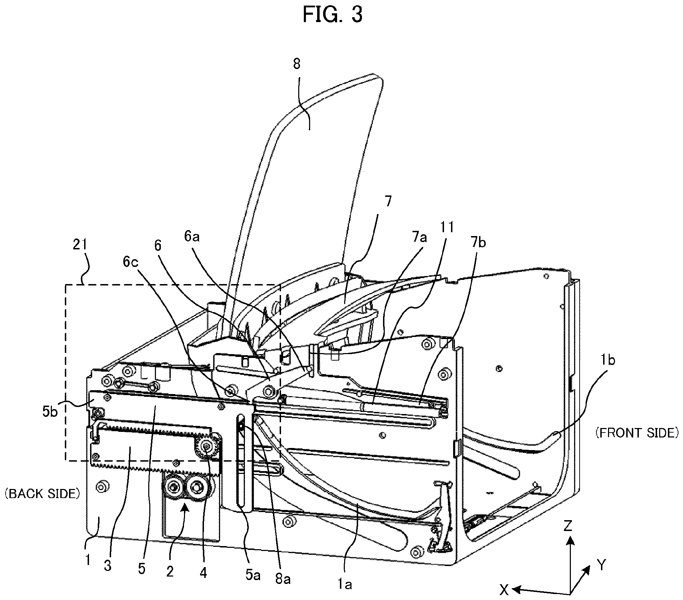

FIGS. 1 to 3 are perspective views illustrating an appearance of a head-up display (hereinafter referred to as "HUD") according to an embodiment of the present invention. Specifically, FIG. 1 is a perspective view of the HUD in a closed state, FIG. 2 is a perspective view of the HUD during opening/closing operation, and FIG. 3 is a perspective view of the HUD in an opened state. In FIGS. 1 to 3, the X-axis indicates a depth direction of the HUD, the Y-axis indicates a width direction of the HUD and the Z-axis indicates a thickness (height) direction of the HUD.

When the HUD is mounted on a dashboard of a vehicle, the "BACK SIDE" in FIG. 1 is the side of the front glass of the vehicle, and the "FRONT SIDE" is the side of the seats. Therefore, a user (a driver) is located on the front side of the HUD.

As shown in FIGS. 1 to 3, in the HUD, a housing 1 is provided with a combiner unit 8 which can get in and out of the housing 1. An opening is formed on the upper face of the housing 1, and the combiner unit 8 moves up and down in the opening. In the closed state shown in FIG. 1, the combiner unit 8 is received in the housing 1. On the contrary, in the opening/closing state shown in FIG. 2 and the opened state in FIG. 3, the combiner unit 8 extends upward from the opening of the housing 1.

Near the opening of the housing 1, a combiner shutter 7 is movably provided. The combiner shutter 7 covers the combiner unit 8 received in the housing 1 in the closed state, and retreats behind (i.e., on the front side in the depth direction) of the standing combiner unit 8 in the opened state.

### (Moving Mechanism of Combiner Unit)

First, a moving mechanism of the combiner unit 8 will be described. On the housing 1, four guide grooves are formed in total on both side faces, i.e., on the near side and the far side in the figures, at the positions symmetrical with respect to the XZ plane. On the side face of the housing 1 on the near side in FIG. 1, a combiner drivingpin guide cam (hereinafter simply referred to as "the driving pin guide cam") 1a is formed. Also, on the side face of the housing 1 on the far side in FIG. 1, a combiner fulcrumpin guide cam (hereinafter simply referredto as "the fulcrum pin guide cam") 1b is formed. The driving pin guide cam 1a and the fulcrum pin guide cam 1b are guide grooves formed on the side faces of the housing 1, and function as the guides regulating the posture of the combiner unit 8 during its movement. Specifically, a combiner driving pin 8a provided at the lower end of the combiner unit 8 on the near side in FIG. 1 engages with the driving pin guide cam 1a and moves along the driving pin guide cam 1a. Also, a combiner fulcrum pin (not shown) provided at the lower end of the combiner unit 8 on the far side in FIG. 1 engages with the fulcrum pin guide cam 1b and moves along the fulcrum pin guide cam 1b. Thus, the combiner unit 8 moves between the closed state and the opened state as shown in FIGS. 1 to 3.

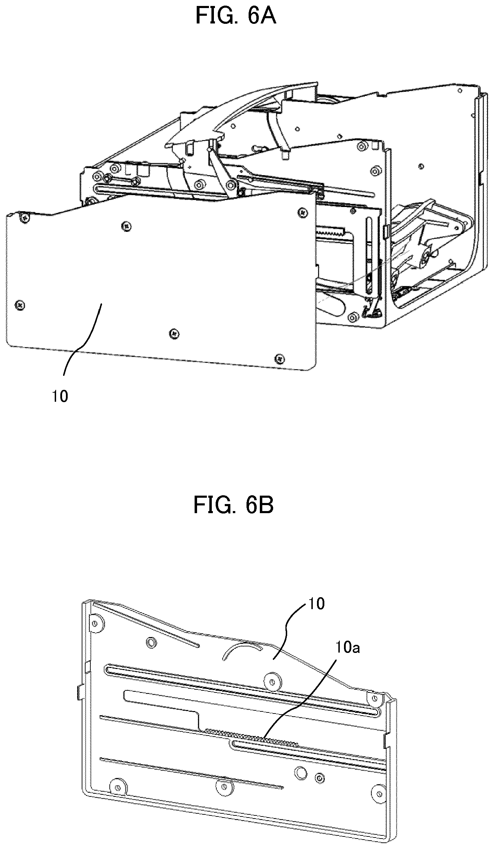

The combiner unit 8 is driven by a drivingmechanismprovided on the side face of the housing 1. Specifically, the driving mechanism includes a motor not shown, driving gears 2, a connecting lever 3, a pinion 4, a driving lever 5, and a fixed rack 10a shown in FIG. 6B. The driving lever 5 has a planer shape of L-shape, which is a planer shape capable of receiving the connecting lever 3. The rotational axis of the motor is connected to the driving gears 2, and the driving force by the motor rotation is transferred to the driving gears 2. The rotation of the driving gears 2 is transferred to the connecting lever 3, and the connecting lever 3 moves in the depth direction (X-axis direction). The pinion 4 is provided at the upper end of the connecting lever 3. The pinion 4 engages with the rack formed on the lower side of the driving lever 5 and also engages with the fixed rack 10a formed on the side cover 10 described later, thereby transferring the driving force of the connecting lever 3 to the driving lever 5. Thus, the driving force of the motor is transferredto the connecting lever 3 and the driving lever 5 serving as a transfer member, and moves the connecting lever 3 and the driving lever 5 in the X-axis direction.

On the front side of the driving lever 5 in the X-axis direction, there is provided a guide groove 5a extending in the thickness direction (Z-axis direction). The driving pin 8a of the combiner unit 8 engages with the driving pin guide cam 1a provided on the housing 1 as described above, and also engages with the guide groove 5a of the driving lever 5. Therefore, when the driving lever 5 moves in the X-axis direction, the driving pin 8a of the combiner unit 8 moves in the driving pin guide cam 1a along its shape, and also moves in the guide groove 5a of the driving lever 5 in the Z-axis direction.

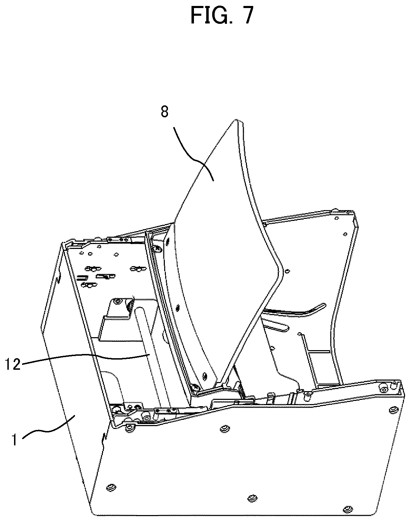

The above-described driving mechanism is also provided on the side face of the housing 1 on the far side in FIGS. 1 to 3, except for the motor. Namely, FIGS. 1 to 3 show the driving mechanism of the combiner unit 8 on the side face of the housing 1 on the near side, and the driving mechanism includes the motor, the driving gears 2, the connecting lever 3, the pinion 4 and the driving lever 5. In contrast, the driving gears 2, the connecting lever 3, the pinion 4 and the driving lever 5 are provided, as the driving mechanism, on the side face of the housing 1 on the far side of the figures. However, the motor is only provided on the side face on the near side of the figures, and the single motor moves the combiner unit 8. Therefore, the driving gears 2 on the side face of the housing 1 on the near side in figures are connected to and synchronized with the driving gears 2 on the side face of the housing 1 on the far side of the figures by a shaft 12 shown in FIG. 7. This shaft 12 penetrates the side face of the housing 1 on the far side of the figures.

In the above structure, the housing 1 corresponds to the housing of the present invention, the combiner unit 8 corresponds to the display member of the present invention, and the motor corresponds to the driving unit of the present invention. The driving lever 5 corresponds to the first transfer member of the present invention, and the connecting lever 3 corresponds to the second transfer member of the present invention. Further, the guide groove 5a corresponds to the guide on the transfer member of the present invention, the driving pin 8a corresponds to the supporting part of the present invention, and the driving pin guide cam 1a corresponds to the guide on the side face of the housing of the present invention.

Next, the moving operation of the combiner unit 8 by the above-described driving mechanism will be described in detail. First, the description will be given of the transition of the HUD from the closed state shown in FIG. 1 to the opened state shown in FIG. 3 via the opening/closing state shown in FIG. 2. In this case, in the closed state shown in FIG. 1, the driving force of the motor is transferred to the driving lever 5 via the connecting lever 3 and the pinion 4, and the driving lever 5 moves from the front side to the back side in the X-axis direction. By this, the driving pin 8a of the combiner unit 8 moves upward in the guide groove 5a of the driving lever 5 and also moves in the upper-left direction in the figures along the driving pin guide cam 1a formed on the housing 1. As a result, as shown in FIG. 2, the combiner unit 8 upwardly comes out from the opening of the housing 1. Thereafter, when the driving lever 5 further moves to the back side in the X-axis direction, the combiner unit 8 becomes completely exposed from the opening and stands up to be the opened state as shown in FIG. 3.

Next, the description will be given of the transition of the HUD from the opened state shown in FIG. 3 to the closed state shown in FIG. 1 via the opening/closing state shown in FIG. 2. In this case, the driving force of the motor is transferred to the driving lever 5 via the connecting lever 3 and the pinion 4, and the driving lever 5 moves from the back side to the front side in the X-axis direction. By this, the driving pin 8a of the combiner unit 8 moves downward in the guide groove 5a of the driving lever 5 and moves in the lower-right direction in the figures along the driving pin guide cam 1a formed on the housing 1. As a result, as shown in FIG. 2, the combiner unit 8 gets into the housing 1. Thereafter, when the driving lever 5 further moves to the front side, the combiner unit 8 is received in the housing 1 to be the closed state as shown in FIG. 1.

As described above, since the motor is not provided on the side face of the housing 1 on the far side in FIGS. 1 to 3, the driving force is not directly given to the fulcrum pin which is provided at the lower end of the combiner unit 8 on the opposite side of the driving pin 8a of the combiner unit 8. However, the fulcrum pin of the combiner unit 8 moves along the fulcrum pin guide cam 1b provided on the housing 1 as the driving pin 8a moves in the driving pin guide cam 1a.

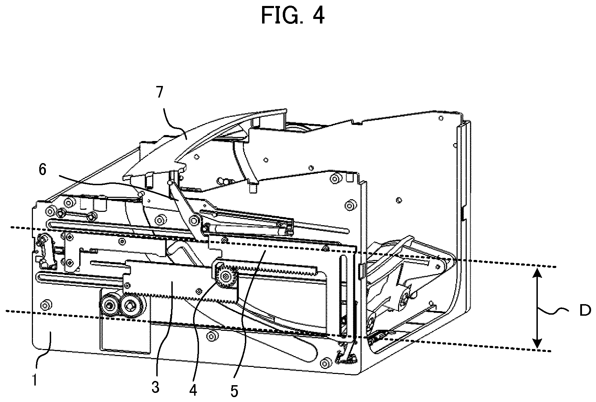

As described above, in this embodiment, the driving mechanism of the combiner unit 8 is arranged on the side faces of the housing 1. Additionally, the driving pin 8a of the combiner unit 8 engages with the guide groove 5a of the driving lever 5, and moves in the guide groove 5a in the thickness direction of the housing 1 and also moves along the driving pin guide cam 1a on the side face of the housing 1. By providing the driving lever 5 with the guide groove 5a to enable the driving pin 8a to move in the thickness direction, the width D of the driving pin guide cam 1a formed on the side face of the housing 1 is overlapped with the width D of the driving lever 5 in the thickness direction of the housing 1 as shown in FIG. 4. Thus, by arranging the driving mechanisms on the side faces, the device may be compact in the up-down direction and the front-back direction.

Also, in this embodiment, the driving force of the motor is transferred to the combiner unit 8 via the transfer member including the connecting lever 3 and the driving lever 5, and the length of the transfer member in the depth direction of the housing 1 is varied by driving the motor. Thereby, the length of the housing 1 in the depth direction can be short, regardless of the length of the transfer member.

In the above embodiment, the driving pin 8a of the combiner unit 8 is formed as a separate member connected to the lower end of the combiner unit 8. Instead, the driving pin may be formed as a part of the lower end of the combiner unit 8.

### (Moving Mechanism of Combiner Shutter)

Next, a moving mechanism of the combiner shutter 7 will be described. As shown in FIGS. 1 to 3, the combiner shutter 7 covers the combiner unit 8 received in the housing 1 in the closed state of the HUD, and moves to the front side of the standing combiner unit 8 in the opened state of the HUD.

Specifically, the guide cams 1c are formed on the left and right side faces of the housing 1, and the end parts 7b of the combiner shutter 7 on the front side in the X-axis direction engage with the guide cams 1c. Thereby, the combiner shutter 7 is movable in the X-axis direction along the guide cams 1c. Also, as shown in FIGS. 2 and 3, the guide grooves 7a extending in the up-down direction (Z direction) are formed on both sides of the combiner shutter 7.

On the other hand, the shutter driving arm 6 is fixed to the housing 1 in a manner rotatable around the fulcrum 6b. The upper end 6a of the shutter driving arm 6 engages with the guide groove 7a of the combiner shutter 7.

As shown in FIGS. 1 to 3, an elastic member 11 such as a spring is attached to the front-side end part 7b of the combiner shutter 7. Specifically, the back-side end part of the elastic member 11 is fixed to the housing 1 near the shutter driving arm 6, and the front-side end part of the elastic member 11 is fixed near the front-side end part 7b of combiner shutter 7. Therefore, by the elastic member 11, forcing power that forces the front-side end part 7b of the combiner shutter 7 to the back side (to the side of the shutter driving arm 6) in the X-axis direction is applied to the combiner shutter 7.

In the above structure, the combiner shutter 7 corresponds to the cover of the present invention, and the shutter driving arm 6 corresponds to the third transfer member of the present invention.

Next, the moving operation of the combiner shutter 7 will be described. First, the description will be given of the transition of the HUD from the closed state shown in FIG. 1 to the opened state shown in FIG. 3 via the opening/closing state shown in FIG. 2. In the closed state shown in FIG. 1, the combiner shutter 7 covers the upper area of the combiner unit 8 received in the housing 1. In this state, the lower end 6c of the shutter driving arm 6 engages with the back-side end part 5b of the driving lever 5 and is stopped. Here, when the driving lever 5 moves to the back side in the X-axis direction by the rotation of the motor, the shutter driving arm 6 rotates in the clockwise direction around the fulcrum 6b. Thus, the upper end 6a of the shutter driving arm 6 engaging with the guide groove 7a of the combiner shutter 7 moves to the front side in the X-axis direction, and the combiner shutter 7 moves to the front side in the X-axis direction.

When the driving lever 5 further moves to the back side in the X-direction, the lower end 6c of the shutter driving arm 6 and the end part 5b of the driving lever 5 are disengaged, and the lower end 6c of the shutter driving arm 6 rests on the upper side of the driving lever 5 as shown in FIG. 2. In this state, the shutter driving arm 6 does not rotate any more even if the driving lever 5 further moves to the back side in the X-axis direction, and the movement of the combiner shutter 7 ends. In this way, as shown in FIG. 3, the combiner shutter 7 retreats to the front side of the combiner unit 8 standing up in the opening and stops in the opened state.

In the opened state, since the elastic member 11 is applying the forcing power that forces the front-side end part 7b of the combiner shutter 7 to the back side in the X-axis direction, the combiner shutter 7 can be stably fixed. Specifically, the movement of the combiner shutter 7 to the back side is prevented because the lower end 6c of the shutter driving arm 6 is locked on the upper side of the driving lever 5, and the movement of the combiner shutter 7 to the front side is prevented because the front-side end part 7b of the combiner shutter 7 is forced to the back side by the elastic member 11.

Next, the description will be given of the transition of the HUD from the opened state shown in FIG. 3 to the closed state shown in FIG. 1 via the opening/closing state shown in FIG. 2. In the opened state shown in FIG. 3, the combiner shutter 7 is at rest on the front side of the standing combiner unit 8. Here, when the driving lever 5 moves to the front side in the X-axis direction by the rotation of the motor, the combiner unit 8 starts getting into the housing 1 as shown in FIG. 2. However, as long as the lower end 6c of the shutter driving arm 6 stays on the upper side of the driving lever 5, the shutter driving arm 6 does not rotate, and the combiner shutter 7 does not move. Then, after the driving lever 5 further moves to the front side in the X-axis direction and the combiner unit 8 gets into the housing 1, when the end part 5b of the driving lever 5 moves to the front side in the X-axis direction to go beyond the lower end 6c of the shutter driving arm 6, the lower end 6c of the shutter driving arm 6 moves downward from the upper side of the driving lever 5.

Here, since the combiner shutter 7 is given the forcing power to the back side in the X-axis direction by the elastic member 11 as described above, the shutter driving arm 6 rotates around the fulcrum 6b in the counter-clockwise direction. By this rotation, the upper end 6a of the shutter driving arm 6, engaged with the guide groove 7a of the combiner shutter 7, moves to the back side, and the combiner shutter 7 moved to the back side. At the same time, the lower end 6c of the shutter driving arm 6 engages with the end part 5b of the driving lever 5. In this way, the combiner shutter 7 stops at the position to cover the combiner unit 8 received in the housing 1.

As described above, in this embodiment, there is provided the shutter driving arm 6 which engages with the combiner shutter 7 and is rotatably supported by the housing 1, and the shutter driving arm 6 rotates by a predetermined by angle by the movement of the driving lever 5. At the time of the transition from the closed state to the opened state, the combiner unit 8 gets out of the housing 1 after the rotation of the shutter driving arm 6. At the time of the transition from the opened state to the closed state, the shutter driving arm 6 starts rotating after the combiner unit 8 is received in the housing 1. Thus, it is possible to prevent the combiner unit 8 from being damaged by the collision with the combiner shutter 7.

### (Fixing Combiner Unit)

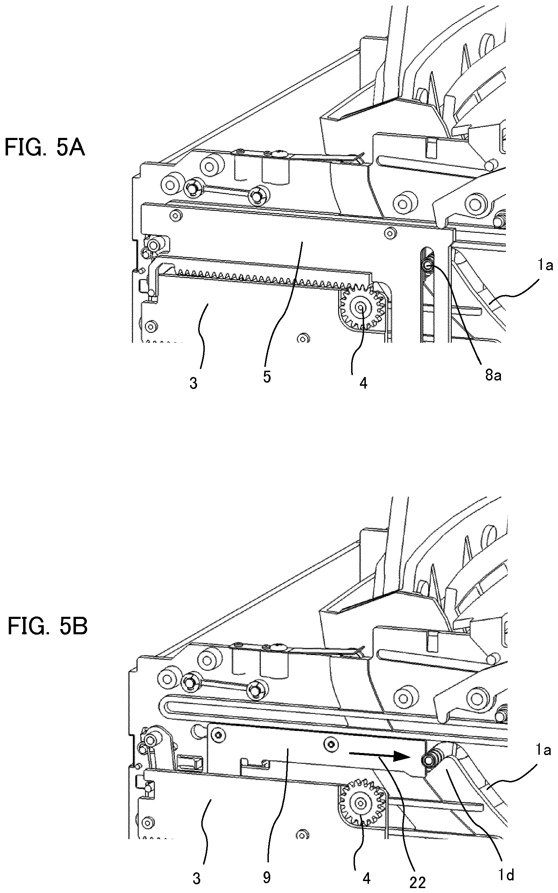

FIG. 5A is a magnified view of the part indicated by the broken line 21 in FIG. 3, showing the opened state, i.e., the state where the combiner unit 8 is standing. FIG. 5B is a view in which the driving lever 5 is omitted from FIG. 5A. As shown in FIG. 5B, at the upper end of the driving pin guide cam 1a, the housing 1 is formed with the projecting part 1d for an angle adjustment. By this, the upper end of the driving pin guide cam 1a has a shape bending upward, i.e., bending toward the opening of the housing 1 (hereinafter referred to as "the bending part"). When the HUD is in the opened state and the combiner unit 8 is standing, the driving pin 8a of the combiner unit 8 gets into the back side in the X-axis direction of the projecting part 1d of the housing 1. Namely, the driving pin 8a is positioned on the left-side inclined face of the bending part of the driving pin guide cam 1a in the figure. Further, as shown in FIG. 5B, a forcing lever 9 is provided inside the driving lever 5 to apply the forcingpower in the direction of the arrow 22. Therefore, in the state where the combiner unit 8 is standing, the driving pin 8a of the combiner unit 8 is fixed in a manner sandwiched between the left-side inclined face of the projecting part of the driving pin guide cam 1a and the forcing lever 9. It is noted that a similar bending part is formed on the fulcrum guide cam 1b provided on side face on the opposite side of the housing 1.

As described above, by forming the bending part on the driving pin guide cam 1a and the fulcrum pin guide cam 1b, it becomes possible to keep the angle of the combiner unit 8 standing in the opened state and prevent the movement thereof. Thereby, it is possible to prevent the angle of the combiner unit 8 from changing due to the external vibration caused by the vibration of the vehicle or else.

Further, it is possible to arbitrarily change the position (an end position) where the driving lever 5 finally reaches on the back side. Thus, the position of the driving pin 8a changes in the X-axis direction, and the angle of the combiner unit 8 in the opened state can be changed.

Still further, the bending angle of the bendingparts formed on the driving pin guide cam 1a and the fulcrum pin guide cam 1b can be arbitrarily changed, and the angle of the display member with respect to the housing 1 in the opened state can be arbitrarily changed.

### (Side Cover)

FIGS. 6A and 6B show the side cover of the HUD. FIG. 6A shows the outer face of the side cover 10, and FIG. 6B shows the inner face of the side cover 10. As shown in FIG. 6B, the fixing rack 10a which engages with the pinion 4 is formed on the inner face of the side cover 10. The fixing rack 10a is formed such that the driving cover 5 is moved with the stroke twice the whole length of the driving lever 5. The fixing rack 10a shown in FIG. 6B is formed to have the same length as the length that the driving lever 5 moves. This establishes a stroke doubling mechanism by the pinion 4 and the fixing rack 10a, and the size of the HUD in the depth direction can be compact.

### [Modified Example]

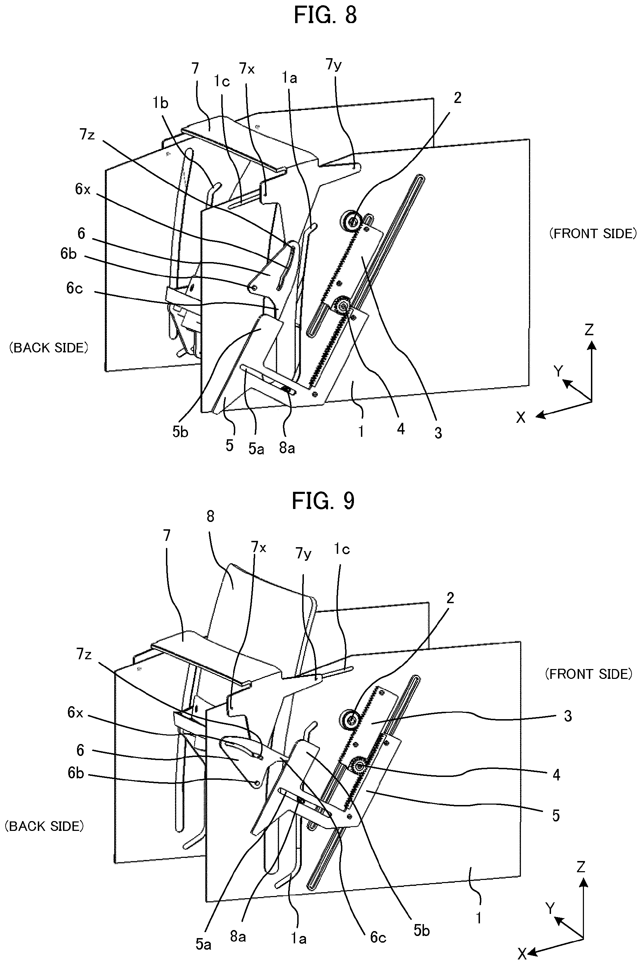

Next, a modified example will be described with reference to FIGS. 8 to 10. It is noted that the description common to the above-described embodiment will be omitted.

In the above embodiment, the driving direction of the driving mechanism is set to the depth direction. However, the driving direction may be set to an arbitrary direction in consideration of the space in the vehicle where the HUD is mounted. In the modified example, the driving direction of the driving mechanism is set to an oblique direction (X-direction and Y-direction).

In the modified example, the driving lever 5 has a U-shaped plan shape capable of receiving the connecting lever 3. On the back side of the driving lever 5 in the X-axis direction, there is provided a guide groove 5a obliquely extending in the XZ plane. The driving pin 8a of the combiner unit 8 engages with the driving pin guide cam 1a provided on the case 1, and also engages with the guide groove 5a of the driving lever 5. Therefore, when the driving lever 5 moves in the oblique direction, the driving pin 8a of the combiner unit 8 moves in the driving pin guide cam 1a along its shape, and also moves in the guide groove 5a of the driving lever 5 in the direction perpendicular to the moving direction of the driving lever 5 (X-axis and Z-axis directions).

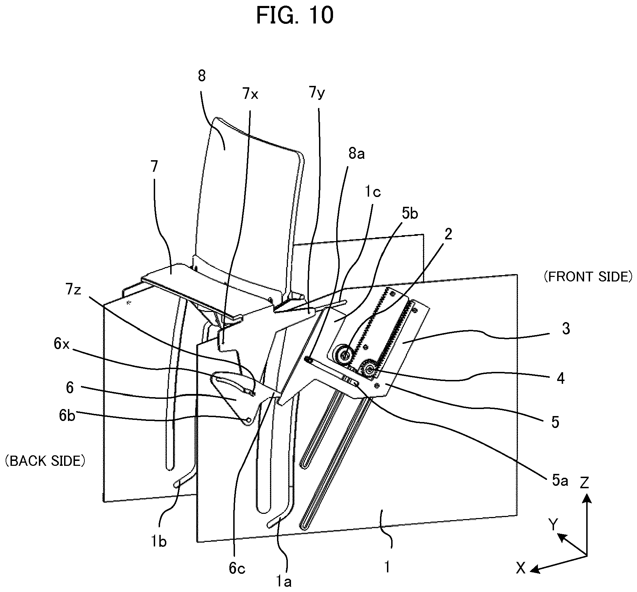

Next, the moving operation of the combiner unit 8 by the above-described driving mechanism according to the modified example will be described. First, the description will be given of the transition of the HUD from the closed state shown in FIG. 8 to the opened state shown in FIG. 10 via the opening/closing state shown in FIG. 9. In this case, in the closed state shown in FIG. 8, the driving force of the motor is transferred to the driving lever 5 via the driving gears 2, the connecting lever 3 and the pinion 4, and the driving lever 5 moves obliquely from the back side to the front side in the X-axis direction. By this, the driving pin 8a of the combiner unit 8 moves obliquely upward in the guide groove 5a of the driving lever 5, and moves upward in FIG. 8 along the driving pin guide cam 1a formed on the housing 1. As a result, as shown in FIG. 9, the combiner unit 8 upwardly comes out from the opening of the housing 1. Thereafter, when the driving lever 5 further moves to the front side in the X-axis direction, the combiner unit 8 becomes completely exposed from the opening and stands up to be the opened state as shown in FIG. 10.

Next, the description will be given of the transition of the HUD from the opened state shown in FIG. 10 to the closed state shown in FIG. 8 via the opening/closing state shown in FIG. 9. In this case, the driving force of the motor is transferred to the driving lever 5 via the driving gears 2, the connecting lever 3 and the pinion 4, and the driving lever 5 moves from the front side to the back side in the X-axis direction. By this, the driving pin 8a of the combiner unit 8 moves obliquely downward in the guide groove 5a of the driving lever 5, and moves downward along the driving pin guide cam 1a formed on the housing 1. As a result, as shown in FIG. 9, the combiner unit 8 starts getting into the opening of the housing 1. Thereafter, when the driving lever 5 further moves to the back side, the combiner unit 8 is received in the housing 1 to be the closed state as shown in FIG. 8.

As described above, in the modified example, the driving mechanism of the combiner unit 8 is arranged on the side faces of the housing 1. Also, the driving pin 8a of the combiner unit 8 engages with the guide groove 5a of the driving lever 5, and moves in the oblique directions of the housing 1 (the thickness direction and the depth direction) and also moves along the driving pin guide cam 1a on the side face of the housing 1. By providing the driving lever 5 with the guide groove 5a enabling the driving pin 8a to move in the oblique direction, the width of the driving pin guide cam 1a is overlapped with the width of the driving lever 5. By arranging the driving mechanism on the side faces in this way, the device can be made compact particularly in the depth direction.

Similarly to the above embodiment, the driving force of the motor is transferred to the combiner unit 8 by the transfer member including the connecting lever 3 and the driving lever 5, and the length of the transfer member in the depth direction of the housing 1 is varied by driving the motor. Therefore, the length of the housing 1 in the depth direction can be short irrespective of the length of the transfer member.

In the modified example, similarly to the embodiment, the driving pin 8a may be formed as a separate member connected to the lower end of the combiner unit 8.

### (Moving Mechanism of Combiner Shutter)

Next, the moving mechanism of the combiner shutter 7 will be described. As shown in FIGS. 8 to 10, the combiner shutter 7 covers the upper area of the combiner unit 8 received in the housing 1 in the closed state of the HUD, and moves to the back side of the standing combiner unit 8 in the opened state of the HUD.

Specifically, the guide cams 1c are formed on the left and right side faces of the housing 1, and the projecting parts 7x and 7y of the combiner shutter 7 (corresponding to the end part 7b in the embodiment), projecting toward the housing 1, engage with the guide cams 1c. By this, the combiner shutter 7 is movable in the X-axis direction along the guide cams 1c. Also, as shown in FIGS. 8 to 10, the shutter driving arm 6 is formed with a guide groove 6x corresponding to the guide groove 7a of the embodiment.

On the other hand, the combiner shutter 7 is provided with a projecting part 7z projecting toward the shutter driving arm 6. The shutter driving arm 6 is fixed to the housing 1 in a manner rotatable around the fulcrum 6b. The projecting part 7z of the combiner shutter 7 engages with the guide groove 6x of the shutter driving arm 6.

To the end parts 7x of the combiner shutter 7, the forcing power forcing toward the back side in the X-axis direction (on the side of the shutter driving arm 6) is applied by an elastic member (not shown).

In the above structure, the combiner shutter 7 corresponds to the cover of the present invention, and the shutter driving arm 6 corresponds to the third transfer member of the present invention.

Next, the moving operation of the combiner shutter 7 will be described. First, the description will be given of the transition of the HUD from the closed state shown in FIG. 8 to the opened state shown in FIG. 10 via the opening/closing state shown in FIG. 9. In the closed state shown in FIG. 8, the combiner shutter 7 covers the upper area of the combiner unit 8 received in the housing 1. In this state, the end part 6c of the shutter driving arm 6 engages with the end part 5b of the driving lever 5 and remains stationary. When the driving lever 5 moves in the oblique direction (toward the front side in the X-axis direction and upward) by the rotation of the motor, the shutter driving arm 6 rotates around the fulcrum 6b in the counter-clockwise direction. By this, the projecting part 7z of the combiner shutter 7 moves in the guide groove 6x of the shutter driving arm 6, and the combiner shutter 7 moves to the back side in the X-axis direction.

When the driving lever 5 further moves to the front side in the X-axis direction and upward, the end part 6c of the shutter driving arm 6 and the endpart 5b of the driving lever 5 are disengaged, and the end part 6c of the shutter driving arm 6 rests on the upper side of the driving lever 5. In this state, the shutter driving arm 6 does not rotate any more even if the driving lever 5 further moves to the front side in the X-axis direction and upward, and the movement of the combiner shutter 7 ends. In this way, as shown in FIG. 10, the combiner shutter 7 retreats to the back side of the combiner unit 8 standing up in the opening and stops.

Next, the description will be given of the transition of the HUD from the opened state shown in FIG.10 to the closed state shown in FIG. 8 via the opening/closing state shown in FIG. 9. In the opened state shown in FIG. 10, the combiner shutter 7 remains stationary on the back side of the standing combiner unit 8. When the driving lever 5 moves in the oblique direction (to the back side in the X-axis direction and upward) by the rotation of the motor, the combiner unit 8 starts getting into the housing 1 as shown in FIG. 9. However, as long as the end part 6c stays on the upper side of the driving lever 5, the shutter driving arm 6 does not rotate and the combiner shutter 7 does not move. Then, after the driving lever 5 further moves to the back side in the X-axis direction and upward and the combiner unit 8 gets into the housing 1, when the end part 5b of the driving lever 5 moves to the back side in the X-axis direction to go beyond the end part 6c of the shutter driving arm 6, the end part 6c of the shutter driving arm 6 moves downward from the upper side of the driving lever 5 to engage with the end part 5b of the driving lever 5.

It is noted that the present invention is not limited to the embodiment and the modified example described above. The movement of the transfer member may be set to the up-down direction (Z-axis direction) by obliquely forming the driving pin guide cam 1a. Further, the bending direction of the drive pin guide cam 1a may be set to the X-axis direction (the back side or the front side), the Z-axis direction (upward, downward) or the combined direction of those directions (the oblique direction).

In the embodiment, the driving mechanisms provided on both side faces of the housing 1 are synchronized. Instead, the display device may be configured such that at least the drive pin guide cam 1a is formed on the both side faces of the housing 1, and the driving mechanism is arranged on only one of the two side faces.

### INDUSTRIAL APPLICABILITY

This invention can be used for a display device having the moving mechanism of the display member.

### BRIEF DESCRIPTION OF REFERENCE NUMBERS

- 1: Housing
- 2: Driving Gears
- 3: Connecting Lever
- 4: Pinion
- 5: Driving Lever
- 6: Shutter Driving Arm
- 7: Combiner Shutter
- 8: Combiner Unit

## Claims

1. A display device comprising:
a housing;
a display member which gets in and out of the housing; and
a transfer member which moves along a side face of the housing by a driving of a driving unit and transfers a driving force of the driving unit to the display member,
wherein a supporting part of the display member engages with a guide on the transfer member and moves along a guide on the side face of the housing.

2. The display device according to claim 1,
wherein a length of the transfer member varies by the driving of the driving unit, and
wherein the transfer member includes a first transfer member and a second transfer member aligned in a thickness direction and/or a depth direction of the housing, the first transfer member and the second transfer member engaging with each other to move close to and away from each other.

3. The display device according to claim 2,
wherein an opening is formed on an upper face of the housing, wherein the guide on the transfer member is formed on the first transfer member,
wherein the first transfer member is arranged on the side of the opening, compared with the second transfer member, and
wherein the second transfer member is arranged on a back side in the depth direction, compared with the guide formed on the first transfer member.

4. The display device according to claim 2, wherein the first transfer member has a plan shape that can receive the second transfer member.

5. The display device according to claim 4, wherein the first transfer member has a plan shape of an L-shape or a U-shape.

6. The display device according to claim 3, further comprising a cover which covers the opening,
wherein the transfer member comprises a third transfer member which engages with the cover,
wherein the third transfer member is rotatably supported by the housing and rotated by a predetermined angle by a movement of the first transfer member, and
wherein the display member gets out of the housing after the third transfer member is rotated during a transition from a closed state to an opened state, and the third transfer member starts rotating after the display member is received in the housing during a transition from the opened state to the closed state.

7. The display device according to claim 6, wherein the cover is forced to a back side of the housing by an elastic member.

8. The display device according to any one of claims 3 to 7, wherein a back-side end part of the guide on the side face of the housing is bending toward the opening.

9. The display device according to any one of claims 1 to 8, wherein the supporting part is a part of the display member at its lower end or a member connected to the lower end.

10. A display device comprising:
a housing;
a display member which gets in and out of the housing; and
a transfer member which moves along a side face of the housing by a driving of a driving unit and transfers a driving force of the driving unit to the display member,
wherein a length of the transfer member varies by the driving of the driving unit, and
wherein the transfer member includes a first transfer member and a second transfer member aligned in a thickness direction and/or a depth direction of the housing, the first transfer member and the second transfer member engaging with each other to move close to and away from each other.
